(19) Europäisches Patentamt / European Patent Office / Office européen des brevets

(11) **EP 4 404 290 A1**

(12) **EUROPEAN PATENT APPLICATION**
published in accordance with Art. 153(4) EPC

(43) Date of publication:
**24.07.2024 Bulletin 2024/30**

(21) Application number: **22867079.0**

(22) Date of filing: **12.07.2022**

(51) International Patent Classification (IPC):
**H01M 4/13** (2010.01)    **C01B 25/14** (2006.01)
**C01G 23/00** (2006.01)    **C01G 53/00** (2006.01)
**H01M 4/36** (2006.01)    **H01M 4/62** (2006.01)

(52) Cooperative Patent Classification (CPC):
**C01B 25/14; C01G 23/00; C01G 53/00; H01M 4/13;
H01M 4/36; H01M 4/62;** Y02E 60/10

(86) International application number:
**PCT/JP2022/027350**

(87) International publication number:
**WO 2023/037757 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.09.2021 JP 2021148671**

(71) Applicant: **Panasonic Intellectual Property
Management Co., Ltd.
Kadoma-shi, Osaka 571-0057 (JP)**

(72) Inventors:
• **SUGIMOTO, Yuta
Kadoma-shi, Osaka 571-0057 (JP)**
• **HASHIMOTO, Kazuya
Kadoma-shi, Osaka 571-0057 (JP)**

(74) Representative: **Grünecker Patent- und
Rechtsanwälte
PartG mbB
Leopoldstraße 4
80802 München (DE)**

(54) **POSITIVE ELECTRODE MATERIAL, POSITIVE ELECTRODE AND BATTERY**

(57)    A positive electrode material 10 includes a positive electrode active material 101, a coating layer 102, and a second solid electrolyte 105. The coating layer 102 contains a first solid electrolyte and coats at least a portion of a surface of the positive electrode active material 101. The first solid electrolyte contains Li, Ti, M, and X, where M is at least one selected from the group consisting of metalloid elements and metal elements other than Li or Ti, and X is at least one selected from the group consisting of F, Cl, Br, and I. The second solid electrolyte 105 is in indirect contact with the positive electrode active material 101 with the coating layer 102 disposed between the second solid electrolyte 105 and the positive electrode active material 101. A percentage of coverage of the surface of the positive electrode active material 101 with the coating layer 102 is greater than or equal to 65%.

FIG. 1

**Description**

Technical Field

The present disclosure relates to a positive electrode material, a positive electrode, and a battery.

Background Art

Patent Literature 1 discloses a method for producing a composite active material. The method includes coating a positive electrode active material with an oxide solid electrolyte and, further, with a sulfide solid electrolyte.

Citation List

Patent Literature

PTL 1: Japanese Unexamined Patent Application Publication No. 2016-18735

Summary of Invention

In the related art, there is a need for improving the cycle characteristics of a battery.
The present disclosure provides a positive electrode material including a positive electrode active material, a coating layer, and a second solid electrolyte. The coating layer contains a first solid electrolyte and coats at least a portion of a surface of the positive electrode active material. The first solid electrolyte contains Li, Ti, M, and X, where M is at least one selected from the group consisting of metalloid elements and metal elements other than Li or Ti, and X is at least one selected from the group consisting of F, Cl, Br, and I. The second solid electrolyte is in indirect contact with the positive electrode active material with the coating layer disposed between the second solid electrolyte and the positive electrode active material. A percentage of coverage of the surface of the positive electrode active material with the coating layer is greater than or equal to 65%.
With the present disclosure, the cycle characteristics of a battery can be improved.

Brief Description of Drawings

[Fig. 1] Fig. 1 is a cross-sectional view illustrating a schematic configuration of a positive electrode material according to a first embodiment.
[Fig. 2] Fig. 2 is a cross-sectional view illustrating a schematic configuration of a positive electrode material according to a modification.
[Fig. 3] Fig. 3 is a cross-sectional view illustrating a schematic configuration of a battery according to a second embodiment.
[Fig. 4] Fig. 4 is an XPS spectrum of a coated active material of Example 1. Description of Embodiments

(Underlying Knowledge Forming Basis of the Present Disclosure)

When a battery that uses a solid electrolyte is repeatedly charged and discharged, oxygen may be evolved from a positive electrode active material. The oxygen that has been evolved oxidizes the solid electrolyte and, consequently, increases an internal resistance of the battery. The increase in the internal resistance results in a number of problems, such as a reduction in an output voltage, heat generation in the battery, and a reduction in a discharge capacity. The reduction in the capacity of a battery due to charging and discharging affects the cycle characteristics of the battery. Accordingly, there is a need for a technology suitable for further improving the cycle characteristics of a battery that uses a solid electrolyte.

(Overview of Aspects of the Present Disclosure)

According to a first aspect of the present disclosure, a positive electrode material includes

a positive electrode active material;
a coating layer containing a first solid electrolyte and coating at least a portion of a surface of the positive electrode active material; and

a second solid electrolyte, in which

the first solid electrolyte contains Li, Ti, M, and X, where M is at least one selected from the group consisting of metalloid elements and metal elements other than Li or Ti, and X is at least one selected from the group consisting of F, Cl, Br, and I,

the second solid electrolyte is in indirect contact with the positive electrode active material with the coating layer disposed between the second solid electrolyte and the positive electrode active material, and

a percentage of coverage of the surface of the positive electrode active material with the coating layer is greater than or equal to 65%.

With the positive electrode material of the first aspect, the cycle characteristics of a battery can be improved.

In a second aspect of the present disclosure, the positive electrode material according to the first aspect may be one in which, for example, the percentage of coverage is greater than or equal to 69%. With this configuration, the cycle characteristics of a battery can be further improved.

In a third aspect of the present disclosure, the positive electrode material according to the first or second aspect may be one in which, for example, the second solid electrolyte contains Li and S. Sulfide solid electrolytes have high ionic conductivity and, therefore, can improve charge-discharge efficiency of a battery. On the other hand, sulfide solid electrolytes exhibit poor oxidation resistance in some cases. In the instance where the second solid electrolyte that is included in a battery includes a sulfide solid electrolyte, the application of the technology of the present disclosure can produce a superior effect in improving the safety of the battery.

In a fourth aspect of the present disclosure, the positive electrode material according to any one of the first to third aspects may be one in which, for example, M includes at least one selected from the group consisting of Ca, Mg, Al, Y, and Zr. In the instance where M includes at least one selected from the group consisting of Ca, Mg, Al, Y, and Zr, a halide solid electrolyte exhibits high ionic conductivity.

In a fifth aspect of the present disclosure, the positive electrode material according to any one of the first to fourth aspects may be one in which, for example, M includes Al. In the instance where M includes Al, a halide solid electrolyte exhibits high ionic conductivity.

In a sixth aspect of the present disclosure, the positive electrode material according to any one of the first to fifth aspects may be one in which, for example, the first solid electrolyte is represented by Formula 1, shown below, in which $\alpha$, $\beta$, $\gamma$, and $\delta$ are each independently a value greater than 0. In the instance where a halide solid electrolyte represented by Formula 1 is used in a battery, power characteristics of the battery can be improved.

$$Li_{\alpha}Ti_{\beta}M_{\gamma}X_{\delta} \qquad \text{(Formula 1)}$$

In a seventh aspect of the present disclosure, the positive electrode material according to any one of the first to sixth aspects may be one in which, for example, the coating layer includes a first coating layer and a second coating layer, the first coating layer contains the first solid electrolyte, and the second coating layer contains a base material; and the first coating layer is located outside of the second coating layer. With this configuration, the charge-discharge efficiency of a battery can be improved.

In an eighth aspect of the present disclosure, the positive electrode material according to the seventh aspect may be one in which, for example, the base material contains an oxide solid electrolyte having lithium ion conductivity. In the instance where an oxide solid electrolyte is used as the base material, the charge-discharge efficiency of a battery can be further improved.

In a ninth aspect of the present disclosure, the positive electrode material according to the seventh or eighth aspect may be one in which, for example, the base material contains lithium niobate. With this configuration, the charge-discharge efficiency of a battery can be improved.

According to a tenth aspect of the present disclosure, a positive electrode includes the positive electrode material according to any one of the first to ninth aspects. With this configuration, the cycle characteristics of a battery can be improved.

According to an eleventh aspect of the present disclosure, a battery includes the positive electrode of the tenth aspect. With the present disclosure, the cycle characteristics of the battery can be improved.

Embodiments of the present disclosure will be described below with reference to the drawings. The present disclosure is not limited to the embodiments described below.

(First Embodiment)

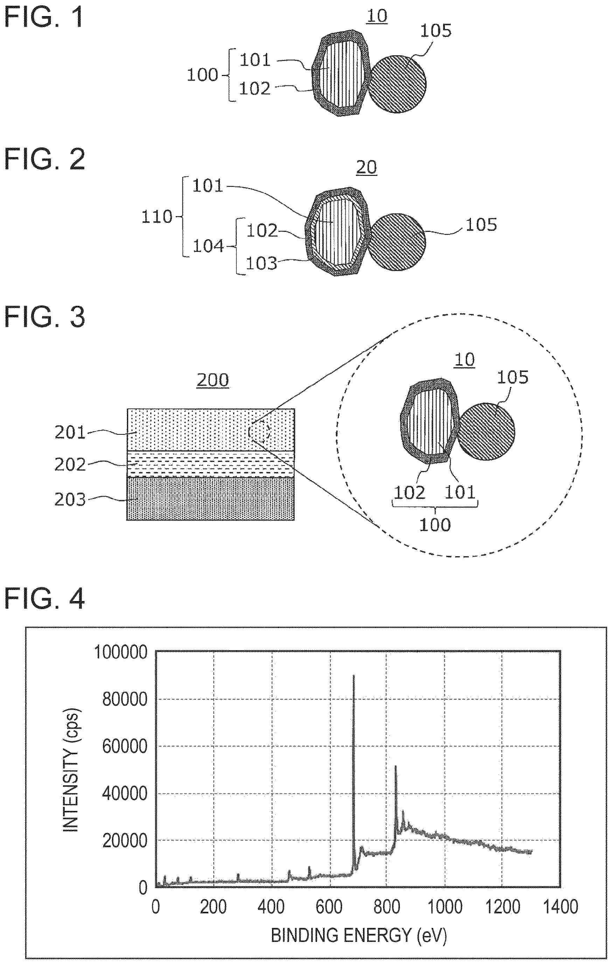

Fig. 1 is a cross-sectional view illustrating a schematic configuration of a positive electrode material according to a first embodiment. A positive electrode material 10 includes a positive electrode active material 101, a coating layer 102, and a second solid electrolyte 105. The coating layer 102 contains a first solid electrolyte. The coating layer 102 coats at least a portion of a surface of the positive electrode active material 101. The coating layer 102 may coat only a portion of the surface of the positive electrode active material 101 or uniformly coat the surface of the positive electrode active material 101. The positive electrode active material 101 and the coating layer 102 constitute a coated active material 100. The second solid electrolyte 105 is in indirect contact with the positive electrode active material 101 with the coating layer 102 disposed between the second solid electrolyte 105 and the positive electrode active material 101.

In the coating layer 102, the first solid electrolyte contains Li, Ti, M, and X. M is at least one selected from the group consisting of metalloid elements and metal elements other than Li or Ti. X is at least one selected from the group consisting of F, Cl, Br, and I. A percentage of coverage of the surface of the positive electrode active material 101 with the coating layer 102 is greater than or equal to 65%.

The metalloid elements include B, Si, Ge, As, Sb, and Te.

The metal elements include all the elements other than hydrogen from Groups 1 to 12 of the periodic table and all the elements other than B, Si, Ge, As, Sb, Te, C, N, P, O, S, or Se from Groups 13 to 16. That is, the metal elements are elements that can become a cation in instances in which any of the elements forms an inorganic compound with a halogen compound.

The first solid electrolyte may be a solid electrolyte containing a halogen, that is, a so-called halide solid electrolyte. Halide solid electrolytes have excellent oxidation resistance. Accordingly, coating the positive electrode active material 101 with the first solid electrolyte can inhibit oxidation of the second solid electrolyte 105. Consequently, an increase in an internal resistance of a battery that uses the positive electrode material 10 can be inhibited, and as a result, the cycle characteristics of the battery that uses the positive electrode material 10 can be improved.

The percentage of coverage of the surface of the positive electrode active material 101 with the coating layer 102 may be greater than or equal to 69%.

The percentage of coverage of the surface of the positive electrode active material 101 with the coating layer 102 may be greater than or equal to 91%.

The upper limit of the percentage of coverage of the surface of the positive electrode active material 101 with the coating layer 102 is not particularly limited. For example, the upper limit of the percentage of coverage of the surface of the positive electrode active material 101 with the coating layer 102 may be 100%.

In the present disclosure, the percentage of coverage of the surface of the positive electrode active material 101 with the coating layer 102 can be determined, for example, by X-ray photoelectron spectroscopy (XPS). Specifically, a surface of the coated active material 100 is measured by XPS to obtain an XPS spectrum. More specifically, an XPS measurement is performed on a powder sample of the coated active material 100. An amount of cationic elements other than Li present in the coated active material 100 is determined from the XPS spectrum. Specifically, each of the peaks appearing in the XPS spectrum is defined and fitted with a Gauss-Lorentz function, and an integrated intensity (=peak area) of each of the peaks is determined from the fitted curve. If a peak is asymmetric, the asymmetry may be taken into account in the calculation. The amount

(atom %) of cationic elements other than Li present in the coating layer 102 is designated as $W_1$. The amount (atom %) of cationic elements other than Li present in the positive electrode active material 101 is designated as $W_p$. A percentage of coverage $R_c$, which is a percentage of coverage provided by the coating layer 102, can be calculated according to Equation 1, shown below. The "amount $W_1$ of cationic elements" is a value representing a ratio, expressed in atom %, of a total amount of cations present in the first solid electrolyte, which is included in the coating layer 102, to the total amount of all the detected cations. The "amount $W_p$ of cationic elements" is a value representing a ratio, expressed in atom %, of the total amount of cations present in the positive electrode active material 101 to the total amount of all the detected cations.

$$R_c = W_1/(W_1 + W_p) \times 100 \qquad \text{(Equation 1)}$$

An average of the percentages of coverage, which may be measured at several random positions (e.g., five points), can be taken as the percentage of coverage provided by the coating layer 102.

In the positive electrode material 10, the second solid electrolyte 105 and the coated active material 100 may be in contact with each other. In this case, the first solid electrolyte and the second solid electrolyte 105 are in contact with each other. The positive electrode material 10 may include particles of a plurality of second solid electrolytes 105 and particles of a plurality of coated active materials 100.

In the positive electrode material 10, a ratio "v1:(100 - v1)", which is a ratio between a volume of the positive electrode active material 101 and a volume of the solid electrolytes, may satisfy $30 \leq v1 \leq 95$. When $30 \leq v1$ is satisfied, a sufficient energy density of a battery is ensured. When $v1 \leq 95$ is satisfied, a high-power operation of a battery can be achieved. The volume of the solid electrolytes is the total volume of the first solid electrolyte and the second solid electrolyte 105.

<Positive Electrode Active Material>

The positive electrode active material 101 includes a material that has a property of occluding and releasing metal ions (e.g., lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 101, the cost of production of a battery can be reduced, and an average discharge voltage can be increased. Examples of the lithium transition metal oxides include $Li(Ni,Co,Al)O_2$, $Li(Ni,Co,Mn)O_2$, and $LiCoO_2$.

The positive electrode active material 101 has a shape of particles, for example. The shape of the particles of the positive electrode active material 101 is not particularly limited. The shape of the particles of the positive electrode active material 101 may be a spherical shape, an ellipsoidal shape, a flake shape, or a fiber shape.

The coated active material 100 may have a median diameter of greater than or equal to 0.1 $\mu$m and less than or equal to 100 $\mu$m. When the median diameter of the coated active material 100 is greater than or equal to 0.1 $\mu$m, the coated active material 100 and the second solid electrolyte 105 can form a favorable state of dispersion in the positive electrode material 10. As a result, charge-discharge characteristics of a battery are improved. When the median diameter of the coated active material 100 is less than or equal to 100 $\mu$m, a sufficient lithium diffusion rate is ensured in the coated active material 100. Consequently, a high-power operation of a battery can be achieved.

The median diameter of the coated active material 100 may be greater than the median diameter of the second solid electrolyte 105. In this case, the coated active material 100 and the second solid electrolyte 105 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

<Coating Layer>

The coating layer 102 contains the first solid electrolyte. The first solid electrolyte has an ionic conductivity. Typically, the ionic conductivity is a lithium ion conductivity. The coating layer 102 is disposed on the surface of the positive electrode active material 101. The coating layer 102 may contain the first solid electrolyte as a major component or may contain only the first solid electrolyte. The term "major component" refers to a component that is present in the largest amount in terms of a mass ratio. The expression "contain only the first solid electrolyte" means that no intentionally added materials other than the first solid electrolyte are present while incidental impurities may be present. Examples of the incidental impurities include raw materials for the first solid electrolyte and by-products that are formed during the preparation of the first solid electrolyte. A ratio of a mass of the incidental impurities to a total mass of the coating layer 102 may be less than or equal to 5%, less than or equal to 3%, less than or equal to 1%, or less than or equal to 0.5%.

The first solid electrolyte is a material containing Li, Ti, M, and X. M and X are as described above. Such materials have excellent ionic conductivity and oxidation resistance. Accordingly, the coated active material 100, which includes the coating layer 102 that contains the first solid electrolyte, improves charge-discharge efficiency of a battery and thermal stability of the battery.

M may include at least one selected from the group consisting of Ca, Mg, Al, Y, and Zr. With this configuration, a halide solid electrolyte exhibits high ionic conductivity.

M may include Al (=aluminum). That is, the metal element that is included in the halide solid electrolyte may be Al. In the instance where M includes Al, the halide solid electrolyte exhibits high ionic conductivity.

M may be Al so that the ionic conductivity of the halide solid electrolyte can be further increased.

The halide solid electrolyte that serves as the first solid electrolyte is, for example, represented by Formula 1, shown below. In Formula 1, $\alpha$, $\beta$, $\gamma$, and $\delta$ are each independently a value greater than 0.

$$Li_\alpha Ti_\beta M_\gamma X_\delta \qquad \text{(Formula 1)}$$

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge efficiency of the battery can be improved.

The halide solid electrolyte may consist essentially of Li, Ti, Al, and X. The expression "the halide solid electrolyte consists essentially of Li, Ti, Al, and X" means that a molar ratio of a sum of the amounts of substance (i.e., a molar fraction) of Li, Ti, Al, and X to a sum of the amounts of substance of all the elements that form the halide solid electrolyte is greater than or equal to 90%. In one example, the molar ratio (i.e., molar fraction) may be greater than or equal to 95%. The halide solid electrolyte may consist only of Li, Ti, Al, and X.

In the halide solid electrolyte, a ratio of the amount of substance of Li to a sum of the amounts of substance of Ti and Al may be greater than or equal to 1.12 and less than or equal to 5.07 so that the ionic conductivity of the first solid electrolyte can be further increased.

The halide solid electrolyte that serves as the first solid electrolyte may be represented by Formula 2, shown below.

$$Li_{6-(4-x)b}(Ti_{1-x}Al_x)_bF_6 \qquad \text{(Formula 2)}$$

In Formula 2, $0 < x < 1$ and $0 < b \leq 1.5$ are satisfied. Halide solid electrolytes having such a composition have high ionic conductivity.

In Formula 2, $0.1 \leq x \leq 0.9$ may be satisfied so that the ionic conductivity of the halide solid electrolyte can be further increased.

In Formula 2, $0.1 \leq x \leq 0.7$ may be satisfied.

In Formula 2, the upper limit and the lower limit of the range of x may be defined by any combination of values selected from 0.1, 0.3, 0.4, 0.5, 0.6, 0.67, 0.7, 0.8, and 0.9.

In Formula 2, $0.8 \leq b \leq 1.2$ may be satisfied so that the ionic conductivity of the halide solid electrolyte can be further increased.

In Formula 2, the upper limit and the lower limit of the range of b may be defined by any combination of values selected from 0.8, 0.9, 0.94, 1.0, 1.06, 1.1, and 1.2.

The halide solid electrolyte may be crystalline or amorphous.

The coating layer 102 has a thickness of, for example, greater than or equal to 1 nm and less than or equal to 500 nm. In the instance where the thickness of the coating layer 102 is appropriately adjusted, contact between the positive electrode active material 101 and the second solid electrolyte 105 can be sufficiently inhibited. The thickness of the coating layer 102 can be determined as follows: a thin specimen is prepared from the coated active material 100 with a method such as ion milling, and a cross section of the coated active material 100 is examined with a transmission electron microscope. An average of thicknesses, which may be measured at several random positions (e.g., five points), can be taken as the thickness of the coating layer 102.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

The halide solid electrolyte has a shape that is not particularly limited. Examples of the shape of the halide solid electrolyte include needle shapes, spherical shapes, and ellipsoidal shapes. For example, the shape of the halide solid electrolyte may be a particle shape.

When the shape of the halide solid electrolyte is, for example, a particle shape (e.g., a spherical shape), the halide solid electrolyte may have a median diameter of greater than or equal to 0.01 $\mu$m and less than or equal to 100 $\mu$m.

<Method for Producing Halide Solid Electrolyte>

The halide solid electrolyte can be produced in the following manner. Described below is an example of a method for producing a halide solid electrolyte represented by Formula 1.

Raw material powders of halides are provided in accordance with a desired composition. The halides may each be a compound of three elements including a halogen element. For example, in instances where $Li_{2.7}Ti_{0.3}Al_{0.7}F_6$ is to be prepared, raw material powders of LiF, $TiF_4$, and $AlF_3$ are to be provided in a molar ratio of approximately 2.7:0.3:0.7. In this instance, the elemental species of M and X in Formula 1 can be determined by appropriate selection of the types of the raw material powders. The values of $\alpha$, $\beta$, $\gamma$, and $\delta$ in Formula 1 can be adjusted by adjusting the types of the raw material powders, a compounding ratio between the raw material powders, and a synthesis process. The raw material powders may be mixed together in a pre-adjusted molar ratio such that a compositional change that can occur in the synthesis process can be offset.

The raw material powders are mixed and ground together, and subsequently, the raw material powders are reacted with one another with a mechanochemical milling method, to produce a reaction product. The reaction product may be heat-treated in a vacuum or an inert atmosphere. Alternatively, after the raw material powders are mixed and ground together, the raw material powders may be heat-treated in a vacuum or an inert atmosphere, to produce a reaction product. The heat treatment is performed, for example, at a temperature of greater than or equal to 100°C and less than or equal to 400°C for 1 hour or more. The raw material powders may be heat-treated in a sealed vessel, such as a quartz tube, so that a compositional change that may occur during the heat treatment can be inhibited. Through these steps, the halide solid electrolyte can be prepared.

The constitution of the crystalline phase (i.e., crystal structure) of the halide solid electrolyte can be adjusted and determined by the method with which the raw material powders are reacted with one another and the conditions for the reaction.

<Second Solid Electrolyte>

The second solid electrolyte 105 may include at least one selected from the group consisting of a halide solid electrolyte, a sulfide solid electrolyte, an oxide solid electrolyte, a polymeric solid electrolyte, and a complex hydride solid electrolyte.

Examples of the halide solid electrolyte include the above-described materials of the first solid electrolyte. That is, the second solid electrolyte 105 may have a composition that is the same as or different from the composition of the first solid electrolyte.

The oxide solid electrolyte is a solid electrolyte containing oxygen. The oxide solid electrolyte may contain an additional anion, in addition to the oxygen anion. The additional anion may be an anion other than that of sulfur or those of halogen elements.

Examples of the oxide solid electrolyte include NASICON-type solid electrolytes, typified by $LiTi_2(PO_4)_3$ and element-substituted derivatives thereof; (LaLi)TiOs-system perovskite-type solid electrolytes; LISICON-type solid electrolytes, typified by $Li_{14}ZnGe_4O_{16}$, $Li_4SiO_4$, $LiGeO_4$, and element-substituted derivatives thereof; garnet-type solid electrolytes, typified by $Li_7La_3Zr_2O_{12}$ and element-substituted derivatives thereof; $Li_3PO_4$ and N-substituted derivatives thereof; and glass or glass-ceramics including a Li-B-O compound-containing base material and one or more additional materials, in which examples of the Li-B-O compound include $LiBO_2$ and $Li_3BO_3$, and examples of the additional materials include $Li_2SO_4$ and $Li_2CO_3$.

Examples of the polymeric solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone, or a mixture of two or more lithium salts selected from these may be used.

Examples of the complex hydride solid electrolyte include $LiBH_4$-LiI and $LiBH_4$-$P_2S_5$.

The second solid electrolyte 105 may contain Li and S. In other words, the second solid electrolyte 105 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 105 that is included in a battery includes a sulfide solid electrolyte, the application of the technology of the present disclosure can produce a superior effect in improving the safety of the battery.

Examples of the sulfide solid electrolyte include $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, and $Li_{10}GeP_2S_{12}$. To any of these, LiX, $Li_2O$, $MO_q$, $Li_pMO_q$, and/or the like may be added. In the LiX, X is at least one selected from the group consisting of F, Cl, Br, and I. In the $MO_q$ and $Li_pMO_q$, the element M is at least one selected from the group consisting of P, Si, Ge, B, Al, Ga, In, Fe, and Zn. In the $MO_q$ and $Li_pMO_q$, p and q are each independently a natural number.

The second solid electrolyte 105 may include two or more of the above-mentioned materials of solid electrolytes. For example, the second solid electrolyte 105 may include a halide solid electrolyte and a sulfide solid electrolyte.

The second solid electrolyte 105 may have a lithium ion conductivity higher than the lithium ion conductivity of the first solid electrolyte.

The second solid electrolyte 105 may contain incidental impurities, such as starting materials used in the synthesis of the solid electrolyte, by-products, and decomposition products. The same applies to the first solid electrolyte.

<Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the coating layer 102 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

Any of the above-mentioned conductive additives may be included in the positive electrode material 10 to enhance electron conductivity.

<Method for Producing Coated Active Material>

The coated active material 100 can be produced in the following manner.

A mixture is prepared by mixing a powder of the positive electrode active material 101 with a powder of the first solid electrolyte in an appropriate ratio. The mixture is subjected to a milling process, in which mechanical energy is applied to the mixture. The milling process can be carried out with a mixer, such as a ball mill. The milling process may be performed in a dry and inert atmosphere so that oxidation of the materials can be inhibited.

The coated active material 100 may be produced with a dry particle-composing method. A process that uses the dry particle-composing method includes applying at least one type of mechanical energy selected from the group consisting of impact, compression, and shear to the positive electrode active material 101 and the first solid electrolyte. The ratio at which the positive electrode active material 101 is mixed with the first solid electrolyte is to be appropriate.

A machine that is used in the production of the coated active material 100 is not particularly limited and may be a machine that can apply mechanical energy of impact, compression, and shear to the mixture containing the positive electrode active material 101 and the first solid electrolyte. The machine that can apply mechanical energy may be a compression-shear processing machine (particle-composing machine), such as a ball mill, Mechanofusion (manufactured by Hosokawa Micron Corporation), or Nobilta (manufactured by Hosokawa Micron Corporation).

Mechanofusion is a particle-composing machine that uses a dry mechanical composing technique, which involves applying high mechanical energy to several different raw material powders. In Mechanofusion, raw material powders loaded between a rotating vessel and a press head are subjected to mechanical energy of compression, shear, and friction. Accordingly, the particles form a composite.

Nobilta is a particle-composing machine that uses a dry mechanical composing technique that has evolved from a particle-composing technique, to carry out the composing of nanoparticles used as a raw material. Nobilta produces composite particles by applying mechanical energy of impact, compression, and shear to several types of raw material powders.

Nobilta includes a horizontal cylindrical mixing vessel, in which a rotor is positioned with a predetermined gap between the rotor and an inner wall of the mixing vessel; with high-speed rotation of the rotor, the raw material powders are forcibly passed through the gap, and this process is repeated multiple times. Accordingly, a force of impact, compression, and shear acts on the mixture, and, consequently, composite particles formed of the positive electrode active material 101 and the first solid electrolyte can be produced. Conditions, such as a rotation speed of the rotor, a process time, and amounts of charge, can be adjusted to control the thickness of the coating layer 102, the percentage of coverage of the positive electrode active material 101 with the first solid electrolyte, and the like.

Note that the process using any of the above-mentioned machines is not essential. The coated active material 100 may be produced by mixing the positive electrode active material 101 with the first solid electrolyte in a mortar, a mixer, or the like. The first solid electrolyte may be deposited onto the surface of the positive electrode active material 101 by using any of a variety of methods, such as a spray method, a spray-dry coating method, an electrodeposition method, a dipping method, and a mechanical mixing method that uses a dispersing machine.

<Method for Producing Positive Electrode Material>

The positive electrode material 10 can be prepared by mixing the coated active material 100 with the second solid electrolyte 105. Methods for mixing the coated active material 100 with the second solid electrolyte 105 are not particularly limited. The coated active material 100 may be mixed with the second solid electrolyte 105 in a device, such as a mortar, or the coated active material 100 may be mixed with the second solid electrolyte 105 in a mixer, such as a ball mill.

(Modification)

Fig. 2 is a cross-sectional view illustrating a schematic configuration of a positive electrode material 20, according to a modification. The positive electrode material 20 includes a coated active material 110 and a second solid electrolyte 105. The coated active material 110 includes a positive electrode active material 101 and a coating layer 104. The coating layer 104 includes a first coating layer 102 and a second coating layer 103. The first coating layer 102 is a layer containing the first solid electrolyte. The second coating layer 103 is a layer containing a base material. The first coating layer 102 is located outside of the second coating layer 103. With this configuration, the cycle characteristics of a battery can be further improved.

The first coating layer 102 is a layer corresponding to the coating layer 102 described above with reference to Fig. 1.

The second coating layer 103 is located between the first coating layer 102 and the positive electrode active material 101. In this modification, the second coating layer 103 is in direct contact with the positive electrode active material 101. The base material that is included in the second coating layer 103 may be a material having low electron conductivity, such as an oxide material or an oxide solid electrolyte.

Examples of the oxide material include $SiO_2$, $Al_2O_3$, $TiO_2$, $B_2O_3$, $Nb_2O_5$, $WO_3$, and $ZrO_2$. Examples of the oxide solid electrolyte include Li-Nb-O compounds, such as $LiNbO_3$; Li-B-O compounds, such as $LiBO_2$ and $Li_3BO_3$; Li-Al-O compounds, such as $LiAlO_2$; Li-Si-O compounds, such as $Li_4SiO_4$; $Li_2SO_4$; Li-Ti-O compounds, such as $Li_4Ti_5O_{12}$; Li-Zr-O compounds, such as $Li_2ZrO_3$; Li-Mo-O compounds, such as $Li_2MoO_3$; Li-V-O compounds, such as $LiV_2O_5$; and Li-W-O compounds, such as $Li_2WO_4$. The base material may be one of these or a mixture of two or more of these.

The base material may be a solid electrolyte having lithium ion conductivity. Typically, the base material is an oxide solid electrolyte having lithium ion conductivity. Oxide solid electrolytes have high ionic conductivity and excellent high-potential stability. In the instance where an oxide solid electrolyte is used as the base material, the charge-discharge efficiency of a battery can be improved.

The base material may be a material containing Nb. Typically, the base material includes lithium niobate (LiNbOs). With this configuration, the charge-discharge efficiency of a battery can be improved. The oxide solid electrolyte that serves as the base material may be any of the materials described above.

In one example, the ionic conductivity of the halide solid electrolyte present in the first coating layer 102 is higher than the ionic conductivity of the base material present in the second coating layer 103. With this configuration, oxidation of the second solid electrolyte 105 can be further inhibited without compromising the ionic conductivity.

The first coating layer 102 has a thickness of, for example, greater than or equal to 1 nm and less than or equal to 500 nm. The second coating layer 103 has a thickness of, for example, greater than or equal to 1 nm and less than or equal to 500 nm. In the instance where the thicknesses of the first coating layer 102 and the second coating layer 103 are appropriately adjusted, contact between the positive electrode active material 101 and the second solid electrolyte 105 can be sufficiently inhibited. The thickness of the layers can be determined with the method previously described.

The percentage of coverage provided by the first coating layer 102 can be determined by X-ray photoelectron spectroscopy (XPS) as with the percentage of coverage provided by the coating layer 102 described above. Note that the amount (atom %) of cationic elements other than Li present in the first coating layer 102 is designated as $W_1$, and the amount (atom %) of cationic elements other than Li present in the second coating layer 103 is designated as $W_2$. The amount (atom %) of cationic elements other than Li present in the positive electrode active material 101 is designated as $W_p$. A percentage of coverage $R_{c1}$ (%), which is a percentage of coverage provided by the first coating layer 102, can be calculated according to Equation 2, shown below. The "amount $W_1$ of cationic elements" is a value representing a ratio, expressed in atom %, of the total amount of cations present in the first solid electrolyte, which is included in the first coating layer 102, to the total amount of all the detected cations. The "amount $W_2$ of cationic elements" is a value representing a ratio, expressed in atom %, of the total amount of cations present in the base material, which is included in the second coating layer 103, to the total amount of all the detected cations. The "amount $W_p$ of cationic elements" is a value representing a ratio, expressed in atom %, of the total amount of cations present in the positive electrode active material 101 to the total amount of all the detected cations.

$$R_{c1} = W_1/(W_1 + W_2 + W_p) \times 100 \qquad \text{(Equation 2)}$$

<Method for Producing Coated Active Material>

The coated active material 110 can be produced in the following manner.

First, the second coating layer 103 is formed on a surface of the positive electrode active material 101. Methods for forming the second coating layer 103 are not particularly limited. Examples of the methods for forming the second coating layer 103 include liquid-phase coating methods and vapor-phase coating methods.

For example, a liquid-phase coating method is as follows. A precursor solution for the base material is applied to the surface of the positive electrode active material 101. In instances where a second coating layer 103 containing $LiNbO_3$ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the second coating layer 103. If necessary, water may be added to the precursor solution. The precursor solution may be acidic or alkaline.

Methods for applying the precursor solution to the surface of the positive electrode active material 101 are not particularly limited. For example, the precursor solution can be applied to the surface of the positive electrode active material 101 in a tumbling fluidized bed granulating-coating machine. The tumbling fluidized bed granulating-coating machine can apply the precursor solution to the surface of the positive electrode active material 101 by spraying the precursor solution onto the positive electrode active material 101 while tumbling and fluidizing the positive electrode active material 101. Accordingly, a precursor coating is formed on the surface of the positive electrode active material 101. Subsequently, the positive electrode active material 101 coated with the precursor coating is heat-treated. The heat treatment causes the gelation of the precursor coating to proceed, which leads to the formation of the second coating layer 103.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 101. In instances where a second coating layer 103 of $LiNbO_3$ is to be formed, the target to be used is densely sintered $LiNbO_3$.

Note that the method for forming the second coating layer 103 is not limited to the methods mentioned above. The second coating layer 103 may be formed with any of a variety of methods, such as a spray method, a spray-dry coating method, an electrodeposition method, a dipping method, and a mechanical mixing method that uses a dispersing machine.

After the second coating layer 103 has been formed, the first coating layer 102 is formed with the method previously described. Accordingly, the coated active material 110 can be obtained.

(Second Embodiment)

Fig. 3 is a cross-sectional view illustrating a schematic configuration of a battery according to a second embodiment. A battery 200 includes a positive electrode 201, a separator layer 202, and a negative electrode 203. The separator layer 202 is disposed between the positive electrode 201 and the negative electrode 203. The positive electrode 201 includes at least one of the positive electrode material 10 and the positive electrode material 20, both described in the first embodiment. With this configuration, the cycle characteristics of the battery 200 can be improved.

The positive electrode 201 and the negative electrode 203 may each have a thickness of greater than or equal to 10 $\mu$m and less than or equal to 500 $\mu$m. When the thicknesses of the positive electrode 201 and the negative electrode 203 are greater than or equal to 10 $\mu$m, a sufficient energy density of the battery can be ensured. When the thicknesses of the positive electrode 201 and the negative electrode 203 are less than or equal to 500 $\mu$m, a high-power operation of the battery 200 can be achieved.

The separator layer 202 is a layer containing an electrolyte material. The separator layer 202 may include at least one solid electrolyte selected from the group consisting of a sulfide solid electrolyte, an oxide solid electrolyte, a halide solid electrolyte, a polymeric solid electrolyte, and a complex hydride solid electrolyte. Details of the solid electrolytes are as described in the first embodiment.

The separator layer 202 may have a thickness of greater than or equal to 1 $\mu$m and less than or equal to 300 $\mu$m. When the thickness of the separator layer 202 is greater than or equal to 1 $\mu$m, the positive electrode 201 and the negative electrode 203 can be separated from each other more reliably. When the thickness of the separator layer 202 is less than or equal to 300 $\mu$m, a high-power operation of the battery 200 can be achieved.

The negative electrode 203 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 $\mu$m and less than or equal to 100 $\mu$m.

The negative electrode 203 may include one or more additional materials, such as a solid electrolyte. The solid electrolyte may be any of the materials described in the first embodiment.

EXAMPLES

Details of the present disclosure will now be described with reference to Examples and a Reference Example. Note that electrodes and batteries of the present disclosure are not limited to those described in the Examples below.

EXAMPLE 1

[Preparation of First Solid Electrolyte]

In an argon glove box with a dew point of -60°C or less, raw material powders of LiF, $TiF_4$, and $AlF_3$ were weighed in a molar ratio of $LiF:TiF_4:AlF_3$ = 2.5:0.5:0.5. These were ground and mixed in a mortar to form a mixture. The mixture was subjected to a milling process, which was performed in a planetary ball mill under the conditions of 500 rpm and 12 hours. In this manner, a powder of a halide solid electrolyte, which served as the first solid electrolyte in Example 1, was prepared. The halide solid electrolyte of Example 1 had a composition represented by $Li_{2.5}Ti_{0.5}Al_{0.5}F_6$ (hereinafter denoted as "LTAF").

[Preparation of Coated Active Material]

A powder of $Li(Ni,Co,Al)O_2$ (hereinafter denoted as "NCA") was provided to be used as the positive electrode active material. Next, a coating layer made of the LTAF was formed on a surface of the NCA. The coating layer was formed with a compression-shear process in a particle composing machine (NOB-MINI, manufactured by Hosokawa Micron Corporation). Specifically, the NCA and the LTAF were weighed in a volume ratio of NCA to LTAF of 95.4:4.6, and the process was carried out under the conditions of a blade clearance of 2 mm, a rotational speed of 6000 rpm, and a process time of 30 min. In this manner, a coated active material of Example 1 was prepared.

[Measurement of Percentage of Coverage]

The percentage of coverage in the coated active material of Example 1 was determined. Specifically, an XPS spectrum was obtained by performing a measurement with a scanning X-ray photoelectron spectrometer (PHI QuanteraSXM, manufactured by Ulvac-PHI, Inc.) under the measurement conditions of a pass energy of 55 eV and a 0.05 eV step. Fig. 4 is the XPS spectrum of the coated active material of Example 1. In Fig. 4, the horizontal axis represents a binding energy (eV), and the vertical axis represents an intensity (cps). The amount of cationic elements other than Li present in the coated active material of Example 1 was determined from the XPS spectrum of Fig. 4. Specifically, each of the peaks appearing in the XPS spectrum was defined and fitted with a Gauss-Lorentz function, and an integrated intensity (=peak area) of each of the peaks was determined from the fitted curve. Table 1 shows the percentage of coverage provided by the coating layer in the coated active material of Example 1, which was calculated according to Equation 1, shown above.

EXAMPLE 2

A coated active material of Example 2 was prepared in the same manner as in Example 1, except that the following changes were made to the conditions of the compression-shear process in the preparation of the coated active material: the rotational speed was changed to 4700 rpm, and the process time to 40 min. The percentage of coverage in the coated active material of Example 2 was determined in the same manner as in Example 1. Table 1 shows the percentage of coverage provided by the coating layer in the coated active material of Example 2.

EXAMPLE 3

A coated active material of Example 3 was prepared in the same manner as in Example 1, except that the following changes were made to the conditions of the compression-shear process in the preparation of the coated active material: the rotational speed was changed to 3500 rpm, and the process time to 40 min. The percentage of coverage in the coated active material of Example 3 was determined in the same manner as in Example 1. Table 1 shows the percentage of coverage provided by the coating layer in the coated active material of Example 3.

REFERENCE EXAMPLE 1

The NCA, without the coating of the LTAF, was used as the active material of Reference Example 1.

[Preparation of Second Solid Electrolyte]

In an argon glove box with a dew point of -60°C or less, raw material powders of $Li_2S$ and $P_2S_5$ were weighed in a molar ratio of $Li_2S:P_2S_5$ = 75:25. These were ground and mixed in a mortar to form a mixture. Subsequently, the mixture was subjected to a milling process, which was performed in a planetary ball mill (P-7 model, manufactured by Fritsch) under the conditions of 510 rpm and 10 hours. In this manner, a glassy solid electrolyte was prepared. The glassy solid electrolyte was heat-treated in an inert atmosphere under the conditions of 270°C and 2 hours. In this manner, $Li_2S$-$P_2S_5$ (hereinafter denoted as "LPS"), which was a glass-ceramic sulfide solid electrolyte and served as the second solid electrolyte in Example 1, was prepared.

[Preparation of Positive Electrode Material]

In an argon glove box, the coated active material and the second solid electrolyte of Example 1 were weighed in a volume ratio of the NCA to the solid electrolytes of 70:30 and in a volume ratio of the first solid electrolyte (LTAF) to the second solid electrolyte (LPS) of 4.8:95.2. These were mixed in an agate mortar to give a positive electrode material of Example 1. Regarding the volume ratio of the NCA to the solid electrolytes, the "solid electrolytes" means the total volume of the first solid electrolyte (LTAF) and the second solid electrolyte (LPS).

Positive electrode materials of Examples 2 and 3 and Reference Example 1 were prepared in the same manner as in Example 1. Regarding the positive electrode materials of Examples 2 and 3, the rotational speed for the compression-shear process was as shown in Table 1.

[Preparation of Battery]

The positive electrode materials were each weighed such that 14 mg of the NCA was present therein. In an insulating cylinder, LPS and the positive electrode material were stacked in the order stated. The resulting multilayer body was pressure-molded at a pressure of 720 MPa. Next, lithium metal was placed in contact with the LPS layer, and the resultant was pressure-molded again at a pressure of 40 MPa. In this manner, a multilayer body formed of a positive electrode, a separator layer, and a negative electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. Through these steps, batteries of Examples 1 to 3 and Reference Example 1 were produced. The batteries were each constrained with four bolts from upper and lower sides to apply an interface pressure of 150 MPa to the batteries.

[Evaluation of Cycle Characteristic]

A charge-discharge test was conducted on the batteries of the Examples and the Reference Example under the conditions described below, and their cycle characteristics were evaluated.

First, the batteries were placed in a constant-temperature chamber at 60°C.

The batteries were charged at a constant current of 5.88 mA, which was a current value corresponding to a 2 C rate (1/2 hour rate), where the C rate was a rate with respect to a theoretical capacity of the batteries, until a voltage of 4.3 V was reached. The term "charged" refers to a state in which a current flows in a direction of lithium ion movement from the positive electrode that contains NCA to the Li metal (i.e., the negative electrode).

Next, the batteries were discharged at a constant current of 5.88 mA, which was a current value corresponding to a 2 C rate (1/2 hour rate), where the C rate was a rate with respect to the theoretical capacity of the batteries, until a voltage of 2.5 V was reached. The term "discharged" refers to a state in which a current flows in a direction of lithium ion movement from the Li metal (i.e., the negative electrode) to the positive electrode that contains NCA.

60 cycles of the charging and discharging described above were performed.

A discharge capacity of the battery in the first cycle was designated as an initial discharge capacity. A ratio of the discharge capacity of the battery in the 60th cycle to the initial discharge capacity was designated as a discharge capacity retention ratio. The discharge capacity retention ratio can be used as an index of the cycle characteristics of batteries. Table 1 shows the results of the evaluation of the batteries of Examples 1 to 3 and Reference Example 1.

[Table 1]

|  | Rotational speed (rpm) | Percentage of coverage (%) | Discharge capacity retention ratio (%) |
|---|---|---|---|
| Example 1 | 6000 | 100 | 90 |
| Example 2 | 4700 | 91 | 87 |
| Example 3 | 3500 | 69 | 86 |
| Reference Example 1 | - | 0 | 80 |

<Discussion>

As shown in Table 1, when the percentage of coverage of the positive electrode active material with the coating layer was greater than or equal to 65%, the discharge capacity retention ratio was improved. That is, a reduction in the capacity of the battery due to charge-discharge cycles was inhibited. Presumably, one reason for this is that inhibition of a reaction between the sulfide solid electrolyte and oxygen released from the positive electrode active material inhibited an increase in an internal resistance of the batteries. Thus, it was demonstrated that the batteries had improved cycle characteristics.

In particular, increasing the percentage of coverage increasingly improved the discharge capacity retention ratio. This demonstrates that the more uniform the coverage of the positive electrode active material with the coating layer, the greater the extent to which a reduction in the capacity due to charge-discharge cycles was inhibited.

Note that Al may be replaced with at least one selected from the group consisting of metalloid elements and metal elements other than Li or Ti, such as Ca, Mg, Y, and Zr; even in such cases, the halide solid electrolyte has a comparable ionic conductivity, which has been previously confirmed (e.g., in Japanese Patent Application No. 2020-048461, filed by the applicant of the present application). Accordingly, it is possible to use a halide solid electrolyte that contains, instead of Al or together with Al, at least one selected from the group consisting of the mentioned elements. Even in this instance, the charging and discharging of the battery is possible, and the effect of inhibiting an increase in the resistance by inhibiting an oxidation reaction of a sulfide solid electrolyte can be produced.

The oxidation of the sulfide solid electrolyte occurs mainly when contact of the sulfide solid electrolyte with the positive electrode active material causes electrons to be withdrawn from the sulfide solid electrolyte. Accordingly, the technology of the present disclosure can produce the effect of inhibiting the oxidation of a sulfide solid electrolyte even in instances in which an active material other than NCAs is used.

Industrial Applicability

The technology of the present disclosure is useful, for example, in an all-solid-state lithium secondary battery.

Reference Signs List

10, 20       positive electrode material
100, 110     coated active material
101          positive electrode active material
102          first coating layer
103          second coating layer
104          coating layer
105          second solid electrolyte
200          battery
201          positive electrode
202          separator layer

203      negative electrode

**Claims**

1. A positive electrode material comprising:

   a positive electrode active material;
   a coating layer containing a first solid electrolyte and coating at least a portion of a surface of the positive electrode active material; and
   a second solid electrolyte, wherein
   the first solid electrolyte contains Li, Ti, M, and X, where M is at least one selected from the group consisting of metalloid elements and metal elements other than Li or Ti, and X is at least one selected from the group consisting of F, Cl, Br, and I,
   the second solid electrolyte is in indirect contact with the positive electrode active material with the coating layer disposed between the second solid electrolyte and the positive electrode active material, and
   a percentage of coverage of the surface of the positive electrode active material with the coating layer is greater than or equal to 65%.

2. The positive electrode material according to claim 1, wherein the percentage of coverage is greater than or equal to 69%.

3. The positive electrode material according to claim 1 or 2, wherein the second solid electrolyte contains Li and S.

4. The positive electrode material according to any one of claims 1 to 3, wherein M includes at least one selected from the group consisting of Ca, Mg, Al, Y, and Zr.

5. The positive electrode material according to any one of claims 1 to 4, wherein M includes aluminum.

6. The positive electrode material according to any one of claims 1 to 5, wherein the first solid electrolyte is represented by Formula 1:

$$\text{Li}_\alpha\text{Ti}_\beta\text{M}_\gamma\text{X}_\delta \qquad \text{(Formula 1)}$$

where $\alpha$, $\beta$, $\gamma$, and $\delta$ are each independently a value greater than 0.

7. The positive electrode material according to any one of claims 1 to 6, wherein

   the coating layer includes a first coating layer and a second coating layer, the first coating layer contains the first solid electrolyte, and the second coating layer contains a base material, and
   the first coating layer is located outside of the second coating layer.

8. The positive electrode material according to claim 7, wherein the base material contains an oxide solid electrolyte having lithium ion conductivity.

9. The positive electrode material according to claim 7 or 8, wherein the base material contains lithium niobate.

10. A positive electrode comprising the positive electrode material according to any one of claims 1 to 9.

11. A battery comprising the positive electrode according to claim 10.

FIG. 1

FIG. 2

FIG. 3

FIG. 4

## INTERNATIONAL SEARCH REPORT

International application No.

**PCT/JP2022/027350**

**A. CLASSIFICATION OF SUBJECT MATTER**

*H01M 4/13*(2010.01)i; *C01B 25/14*(2006.01)i; *C01G 23/00*(2006.01)i; *C01G 53/00*(2006.01)i; *H01M 4/36*(2006.01)i; *H01M 4/62*(2006.01)i
FI:   H01M4/13; C01B25/14; C01G23/00 C; C01G53/00 A; H01M4/36 C; H01M4/62 Z

According to International Patent Classification (IPC) or to both national classification and IPC

**B. FIELDS SEARCHED**

Minimum documentation searched (classification system followed by classification symbols)

H01M4/13; C01B25/14; C01G23/00; C01G53/00; H01M4/36; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/161752 A1 (PANASONIC INTELLECTUAL PROPERTY MANAGEMENT CO., LTD.) 19 August 2021 (2021-08-19)<br>claims, paragraphs [0016], [0082], [0094] | 1-4, 6-11 |
| A | | 5 |
| Y | US 2013/0071745 A1 (SAMSUNG ELECTRONICS CO., LTD.) 21 March 2013 (2013-03-21)<br>claims, paragraphs [0026], [0064] | 1-4, 6-11 |
| A | | 5 |
| A | WO 2019/058702 A1 (PANASONIC INTELLECTUAL PROPERTY MANAGEMENT CO., LTD.) 28 March 2019 (2019-03-28) | 1-11 |
| A | WO 2020/070955 A1 (PANASONIC INTELLECTUAL PROPERTY MANAGEMENT CO., LTD.) 09 April 2020 (2020-04-09) | 1-11 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/027350**

| Patent document cited in search report | | | Publication date (day/month/year) | Patent family member(s) | | | Publication date (day/month/year) |
|---|---|---|---|---|---|---|---|
| WO | 2021/161752 | A1 | 19 August 2021 | (Family: none) | | | |
| US | 2013/0071745 | A1 | 21 March 2013 | KR 10-2013-0030660 | | A | |
| WO | 2019/058702 | A1 | 28 March 2019 | US | 2020/0251716 | A1 | |
| | | | | CN | 111095614 | A | |
| WO | 2020/070955 | A1 | 09 April 2020 | US | 2021/0098823 | A1 | |
| | | | | EP | 3863028 | A1 | |
| | | | | CN | 112204675 | A | |

Form PCT/ISA/210 (patent family annex) (January 2015)

**REFERENCES CITED IN THE DESCRIPTION**

**Patent documents cited in the description**

- JP 2016018735 A

- JP 2020048461 A